# NEUE EUROPÄISCHE PATENTSCHRIFT

(11) **EP 2 801 558 B2**
(45) Veröffentlichungstag und Bekanntmachung des Hinweises auf die Entscheidung über den Einspruch: **04.07.2018**
(45) Hinweis auf die Patenterteilung: 04.11.2015
(21) Anmeldenummer: 13005291.3
(22) Anmeldetag: 11.11.2013
(51) Int. Cl.: C04B 7/345, C04B 28/04, C04B 40/00

(54) **VERWENDUNG VON BELIT-CALCIUMALUMINAT ALS ADDITIV**
USE OF BELITE CALCIUM ALUMINATE AS ADDITIVE
UTILISATION DE BÉLITE-ALUMINATE DE CALCIUM COMME ADDITIF

(30) Priorität: 11.05.2013 EP 13002496
(43) Veröffentlichungstag der Anmeldung: 12.11.2014
(73) Patentinhaber: HeidelbergCement AG, 69120 Heidelberg (DE)
(72) Erfinder: Schmitt, Dirk, 69181 Leimen (DE); Ben Haha, Mohsen, 69117 Heidelberg (DE); Itul, Anca, 69115 Heidelberg (DE); Spencer, Nicolas, 69254 Malsch (DE)
(74) Vertreter: Zellentin & Partner mbB Patentanwälte

(56) Entgegenhaltungen:
- EP-A1- 1 719 741
- EP-A1- 2 243 754
- EP-A1- 2 676 943
- WO-A1-2009/015769
- WO-A1-2009/015770
- WO-A1-2009/015771
- WO-A2-2007/017142
- DE-B4-102005 037 771
- DE-B4-102009 018 632
- FR-A1- 2 940 274
- ISHIDA H. ET AL: 'alpha-Dicalcium silicate hydrate: Preparation, decomposed phase, and its hidratation' J. AM. CERAM. SOC. Bd. 76, Nr. 7, 1993, Seiten 1707 - 1712
- KIM Y-M. ET AL: 'Influence of minor lons ion the stabilita and hyydration rates of beta-Dicalcium silicate' J. AM. CERAM. SOC. Bd. 87, Nr. 5, 2004, Seiten 900 - 905
- JERNEJCIC J. ET AL: 'Thermal decomposition od alpha-dicalcium silicate hydrate' THERMOCHIMICA ACTA Bd. 20, 1977, Seiten 237 - 247
- MIYAZAKI M. ET AL: 'Crystallographic data of a new phase of dicalcium silicate' J. A. CERAM. SOC. Bd. 81, Nr. 5, 1998, Seiten 1339 - 1343
- TORAYA H. ET AL: 'Simulated annealing structure solution of a new phase of dicalcium silicate Ca2SiO4 and the mechanism of structural changes from alpha-dicalcium silicate hydrate to alpha'L-dicalcium silicate via the new phase' ACTA CRYST. Bd. B58, 2002, Seiten 613 - 621
- HJORTH L. ET AL: 'Belite in Portland Cement, Cement and Concrete Research', Bd. 1, 1971, PERGAMON PRESS, INC. Seiten 27 - 40
- GARBEV K. ET AL: 'First observation of alpha -Ca2¬SiO3(OH)|-Ca6Si2O4|(OH)2 phase transformation upon thermal treatment in air' J. AM. CERAM. SOC. Bd. 92, Nr. 1, 2008, Seiten 263 - 271
- BARNES P. ET AL: 'Composition of Portland Cement Belites, Cement and Concrete Research', Bd. 8, 1978, PERGAMON PRESS, INC. Seiten 559 - 564
- ISHIDA E.H. ET AL: 'Innovative processing for cement materials' MRS BULLETIN November 2001, Seiten 895 - 898
- GOSH S.N.: 'Hydration of polymorphs of dicalcium silicate' IL CEMENTO Bd. 3, 1985, Seiten 139 - 146
- LOCHER F.W.: 'Zement: Grundlagen der Herstellung und Verwendung', 2000, VERLAG BAU UN TECHNIK, DÜSSELDORF Seiten 31 - TAB.3.1
- M. Fylak: "Untersuchungen zum frühen Hydratationsverhalten von Portland-und Portlandkompositzementen", Dissertation Martin-Luther-Universität Halle-Wittenberg, 2011
- C. Schneider: "Charakterisierung von Zementbestandteilen", Conference Paper, Conference: Forschungskolloquium des Deutschen Ausschusses für Stahlbeton /DAfStb), Düsseldorf, Volume 41, Juli 2002
- Berechnungsblätter zur Berechnung molarer Verhältnisse aus chemischen Zusammensetzungen in D10, D16, D17 und D18
- FORSCHUNGSZENTRUM KARLSRUHE GMBH: 'Zement-Taschenbuch', Bd. 51. AUSG, 2008, VERLAG BAU+TECHNIK GMBH Seiten 18-27 - 112-123
- GU P. ET AL: 'A conduction calorimetric stud of early hydration of ordinary Portland cement/high alumina cement pastes' JOURNAL OF MATERIALS SCIENCE Bd. 32, 1997, Seiten 3875 - 3881
- Research Results Digest 382, "Measuring Cement Particle Size and Surface Area by Laser Diffration", National Cooperative Highway Research Programm, April 2013
- RESCHKE T. ET AL: 'Einfluß der Granulometrie und Reaktivität von Zement und Zusatzstoffen auf die Festigkeits- und Gefügeentwicklung von Mörtel und Beton, Betontechnische Berichte 1998-2000', 2001, VERLAG BAU + TECHNIK, DÜSSELDORF Seiten 25 - 38

## Beschreibung

Die vorliegende Erfindung betrifft die Verwendung von Belit-Calciumaluminat als Beschleuniger zur Beschleunigung des Erstarrens und/oder der Erhärtung von Bindemitteln enthaltend Portlandzement.

Zement als hydraulisches Bindemittel ist ein wichtiges industrielles Erzeugnis, das meist zu wesentlichen Anteilen aus Portlandzementklinker besteht. Dieser Klinker wird durch Sinterung eines Gemisches aus Kalk, Sand, Ton und Korrekturstoffen bei etwa 1450 °C hergestellt. Nach der Hochtemperaturreaktion liegen die folgenden fremdoxidhaltigen Phasen vor: Alit (Ca₃SiO₅, wird auch als C₃S bezeichnet), Belit (Ca₂SiO₄, wird auch als C₂S bezeichnet), Aluminat (Ca₃Al₂O₆, wird auch als C₃A bezeichnet) und Ferrit (Ca₂(AlₓFe₁₋ₓ)₂O₅, wird mit x von rund 0,4 bis 0,6 auch als C₄AF bezeichnet). Dabei tritt Belit hauptsächlich in der Form des β-Polymorphs auf. Diese Phase gilt als relativ träge mit einem geringen Beitrag zur Festigkeit im frühen Alter.

Die hydraulische Reaktivität beschreibt die Reaktion eines Bindemittels mit Wasser unter Bildung eines festen Materials, welches seine Festigkeit auch unter Wasser entwickeln kann beziehungsweise behält. Im Gegensatz zu derjenigen von Alit erfolgt die Belit-Hydratation langsam über mehrere Monate und Jahre.

Es ist bekannt, dass die Reaktivität von Belit mit Wasser durch mechanochemische Aktivierung (DD 138197 A1), eine schnelle Kühlung nach dem Brennprozess (DD 138197 A1 und DE 3414196 A1) sowie den Einbau von Fremdoxiden (US 5509962 A und DE 3414196 A1) verbessert werden kann. Außerdem sind neben der β-Variante des Belits andere Polymorphe bekannt, die eine bessere (α, α'H, α'L und x) oder schlechtere Reaktivität aufweisen (γ).

Aus H. Ishida, S. Yamazaki, K. Sasaki, Y. Okada, T. Mitsuda, [alpha]-Dicalcium Silicate Hydrate: Preparation, Decomposed Phase, and Its Hydration,

J. Am. Ceram. Soc. 76, S. 1707-1712, 1993 ist ein Verfahren zur Herstellung von α-Dicalcium-Silikat-Hydrat (α-C₂SH) bei 200 °C durch eine zweistündige hydrothermale Behandlung von gebranntem Kalk (CaO) und Kieselsäure für Laborsynthesen (Reinheitsgrad p.a.) bekannt. Im Temperaturbereich von 390-490 °C wandelt sich α-C₂SH in verschiedene C₂S-Modifikationen um, die bei weiterer Erhitzung auf 920-960 °C in die α'L-Phase übergehen und beim Abkühlen β-C₂S bilden. Nachteilig hieran ist der hohe Anteil an reaktionsträgem γ-C₂S.

In DE 10 2009 018 632 ist ein Verfahren zur Herstellung eines belithaltigen Bindemittels offenbart, in dem ein Zwischenprodukt, das bei 120 -250 °C durch hydrothermales Behandeln des Ausgangsmaterials mit einem molaren Verhältnis Ca/(Si+Al) zwischen 1,5 und 2,5 hergestellt wurde, einer Reaktionsmahlung bei 100-200°C zwischen 5 min und 30 min unterzogen wird. Nachteilig ist, dass das Reaktionsmahlen ein energetisch ineffizienter Schritt ist. Weiterhin kann nur bei Zugabe von Fließmitteln eine ausreichende Druckfestigkeit nach der Erhärtung erreicht werden.

DE 10 2005 037 771 offenbart ein Verfahren zur Herstellung von Belit-Zement, in dem α-Dicalcium-Silikat-Hydrat (α-C₂SH) bei 100-300 °C durch eine hydrothermale Behandlung des Ausgangsmaterials, das CaO und SiO₂ im molaren Ca/Si-Verhältnis 1,5-2,5 enthält, entsteht. Im Temperaturbereich zwischen 500 und 1000 °C wird α-C₂SH in hydraulisch reaktive C₂S-Modifikationen (Belit-Zement) umgewandelt. Nachteilig hieran ist, dass der Brennprozess bei vergleichsweise hoher Temperatur (über 500 °C) durchgeführt werden muss. Diese hohen Temperaturen führen weiterhin zur Senkung der Reaktivität des Bindemittels.

Jiang et al., "Hydrothermal Processing of New Fly Ash Cement", Ceramic Bulletin, 71, 1992, pages 642 to 647 beschreiben eine Umsetzung von Flugasche und CaO zu C₂S und C₁₂A₇ durch hydrothermale Behandlung (4h bei 200 °C) und Kalzinieren bei 500 bis 900 °C. Die hohe Temperatur beim Kalzinieren wirkt sich negativ auf die Reaktivität des Produkts aus. Zudem ist eine zehnstündige Vorbehandlung bei 80 °C notwendig.

Die nicht vorveröffentlichte EP 12004620.6 beschreibt ein Verfahren zur Herstellung eines Bindemittels, umfassend die Schritte:
a) Bereitstellen eines Ausgangsmaterials, das ein molares Ca/Si-Verhältnis von 1,5 bis 2,5 aufweist, bei dessen Ermittlung diejenigen Bestandteile unberücksichtigt bleiben, die sich bei einer hydrothermalen Behandlung im Autoklaven inert verhalten, aus Rohstoffen
b) Mischen der Rohstoffe,
c) Hydrothermales Behandeln der in Schritt b) hergestellten Ausgangsmaterialmischung im Autoklaven bei einer Temperatur von 100 bis 300 °C und einer Verweilzeit von 0,1 bis 24 h, wobei das Wasser/Feststoff-Verhältnis 0,1 bis 100 beträgt,
d) Tempern des in Schritt c) erhaltenen Zwischenprodukts bei 350 bis 495 °C, mit einer Aufheizrate von 10-6000 °C/min und einer Verweilzeit von0,01-600 min, wobei während des Mischens und/oder in den folgenden Schritten 0,1 bis 30 Gew.-% zusätzliche Elemente und/oder Oxide zugegeben werden.

Pimraksa et al., "Synthesis of belite cement from lignite fly ash", Ceram. Int. 35 (2009) 2415-2425 weisen nach, dass Flugasche als Edukt zur Herstellung von Belitzement durch hydrothermale Behandlung und Kalzinieren geeignet ist. Die hydrothermale Behandlung findet bei 130 °C bevorzugt in Anwesenheit von NaOH zur Schaffung alkalischer Bedingungen statt. Die Produkte der hydrothermalen Behandlung werden dann bei 750 bis 950 °C 30 Minuten kalziniert, wobei die Aufheizrate 8 °C/min bis 600 °C und darüber 4 °C/min. beträgt. Als Produkt werden C₂S (β und α) und C₁₂A₇ genannt.

Diese Vorschläge zielen auf die Herstellung von Bindemitteln ab, die Produkte sollen für sich Portlandzement(klinker) vollständig ersetzen. Nachteilig daran ist, dass solche neuartigen Zemente und Bindemittel nicht genormt sind, was ihre Akzeptanz in der Bauindustrie erheblich beeinträchtigt. Aufwändige Zulassungsverfahren sind nötig.

Es ist weiterhin bekannt, dass Additive das Ansteifen/Erstarren und die Erhärtung von Portlandzement beschleunigen können. Die am weitesten verbreiteten Beschleuniger umfassen stark alkalische Materialien wie Alkalihydroxide, Alkalicarbonate, Alkalisilikate und Alkali- sowie Erdalkalichloride. Stark alkalische Substanzen können die Haut reizen und die Augen verätzen. Durch Einatmen des beim Verarbeiten entstehenden Staubes können auch schädliche Auswirkungen auf die Atemwege entstehen. Hoch alkalische Beschleuniger vermindern auch die Endfestigkeit und erhöhen das Schwinden. Das verursacht Risse und stellt dadurch die Dauerhaftigkeit der Strukturen in Frage. Chloridhaltige Beschleuniger sind auf einer Baustelle generell unerwünscht, weil sie zu Korrosion sowohl an der Bewehrung im Beton als auch an den Maschinen und Werkzeugen führen können.

Es sind alkali-freie Erstarrungsbeschleuniger für hydraulische Bindemittel wie Al₂(SO₄)₃, Al(NO)₃, Al(OH)₃ und Mischungen davon bekannt, welche diese Nachteile vermeiden. EP 0 076 927 B1 lehrt Aluminiumhydroxid als besonders geeigneten Beschleuniger für Ansteifen und Erhärtung von Injektionsmörtel und Beton. EP 0 946 451 B1 beschreibt eine Lösung von Aluminium, Aluminiumsalzen und Carbonsäuren. Aus DE 25 48 687 ist eine Mischung von Aluminat, Aluminiumoxid, einem Carbonationen abgebenden Stoff und einem die Thixotropie fördernden Stoff als Erstarrungsbeschleuniger bekannt. Der Nachteil dieser Erhärtungsbeschleuniger ist die unzureichende Stabilität der Suspensionen, da die Substanzen nicht ausreichend wasserlöslich sind.

Weiterhin ist es bekannt, hydraulisch reaktive Additive wie z.B. amorphes Calciumaluminat mit einer Zusammensetzung nahe an C₁₂A₇ im Gemisch mit Anhydrit oder Calciumsulphoaluminate basierend auf Ye'elimit, Freikalk und Anhydrit zuzufügen, siehe beispielsweise Le Saoüt et al. in "Cement and Concrete Research" 43, S. 81-94, 2013; Ping et al in "A conduction calorimetric study of early hydration of ordinary Portland cement/high alumina cement pastes", J. Material Sciences, 32, S. 3875-3881, 1997 und Takehiro et al in "Quick setting property and hydration of Portland cement with accelerating agent based on calciumaluminate", J. Material Science, 49, S. 209 - 214, 2000. Der Einsatz von amorphem Calciumaluminat bewirkt eine Beschleunigung des Erstarrens und/oder der Erhärtung von Portlandzement auf Basis einer schnellen Ettringit-Bildung durch Reaktion von amorphem C₁₂A₇ mit Anhydrit. Die gebildeten C-S-H Phasen haben eine ähnliche Mineralogie wie bei reinem Portlandzement, jedoch mit anderen Mengenverhältnissen. Die Menge an Ettringit nimmt zu. Die Herstellung von Calciumaluminaten erfordert einen hohen Energieeinsatz und häufig auch hochwertige Rohstoffe.

Es besteht daher weiter die Aufgabe, Addtive zu finden, durch die eine hohe Reaktivität des Bindemittels erzielt werden kann, um dadurch leistungsfähige Zemente herzustellen.

Überraschend wurde nun gefunden, dass sich ein Belit-Calciumaluminat als Beschleuniger für Portlandzement eignet, welches aus Rohstoffen, welche Ca, Si, und Al sowie ggfs. Fe enthalten, durch hydrothermales Behandeln und anschließendes Tempern bei 350 bis maximal 600 °C, idealerweise bei unter 500 °C, erhältlich ist.

Daher wird die Aufgabe durch die Verwendung von Belit-Calciumaluminat als Beschleuniger für Portlandzement gelöst, wobei der Beschleuniger erhältlich ist durch:
a) Bereitstellen eines Ausgangsmaterials aus Rohstoffen, welche CaO, SiO₂, Al₂O₃ und Fe₂O₃ oder andere Verbindungen dieser Elemente enthalten und ein molares (Ca)/(Si+Al+Fe)-Verhältnis von 1 bis 3,5, und ein molares Verhältnis (Al+Fe)/Si von 100 bis 0,1 aufweisen, wobei nicht mehr als 10 Gew.-% Mg enthalten sind,
b) Mischen der Rohstoffe,
c) Hydrothermales Behandeln der in Schritt b) hergestellten Ausgangsmaterialmischung im Autoklaven bei einer Temperatur von 100 bis 300 °C und einer Verweilzeit von 0,1 bis 24 h, wobei das Wasser/Feststoff-Verhältnis von 0,1 bis 100 beträgt,
d) Tempern des in Schritt c) erhaltenen Zwischenprodukts bei 350 bis 600 °C, wobei die Aufheizrate von 10 - 6000 °C/min und die Verweilzeit von 0,01 - 600 min betragen.
Vorzugsweise können während des Mischens b) und/oder in den folgenden Schritten 0,1 bis 30 Gew.-% zusätzliche Elemente und/oder Oxide zugegeben werden.

In dem Verfahren soll das molare Verhältnis der Summe von Calcium zur Summe von Silizium, Aluminium und Eisen von 1,0 bis 3,5, vorzugsweise von 1,5 bis 2,5, besonders bevorzugt etwa 2, betragen. Das Verhältnis der Summe von Aluminium und Eisen zu Silizium beträgt von 0,01 bis 100. Für einen hohen Aluminiumgehalt ist ein Verhältnis der Summe von Aluminium und Eisen zu Silizium von 100 bis 10 bevorzugt, für einen mittleren Aluminiumgehalt von 1 bis 20 und für einen niedrigen Aluminiumgehalt von 0,01 bis 2. Bei der Berechnung der Verhältnisse werden auch nicht umgesetzte Anteile der Elemente/Oxide in den Rohstoffen einbezogen. Der Gehalt an Mg sollte maximal 10 Gew.-% oder darunter, vorzugsweise maximal 5 Gew.-% oder darunter, betragen.

Als Ausgangsmaterial können Primär- und/oder Sekundärrohstoffe eingesetzt werden. In einer bevorzugten Ausgestaltung werden Quarze, Sande oder Kiese, Altbeton und Flugasche als Rohstoffe für das Ausgangsmaterial verwendet. Das gewünschte Ca/(Si+Al+Fe)- bzw. Al/Si-Verhältnis kann je nach Rohstoff bereits vorliegen, wenn nicht, müssen die Materialien vor der weiteren Behandlung bezüglich der chemischen Zusammensetzung durch Zugabe weiterer Reaktionspartner wie Ca-, Al-, Fe- oder Si-haltiger Feststoffe zur Einstellung des erforderlichen Ca:(Si+Al+Fe)-Verhältnisses von 1 bis 3,5, des gewünschten Ca:-Verhältnisses von 0,1 bis 100 bzw. des gewünschten Al+Fe:Si-Verhältnisses von 100 bis 0,1 eingestellt werden. Zur Erhöhung des Ca-Anteils eignen sich beispielsweise, aber nicht ausschließlich, Portlandit Ca(OH)₂ oder gebrannter Kalk, Aschen mit hohem chemischem CaO- und/oder Freikalkgehalt, Zementklinker sowie Hüttensand. Zur Erhöhung des Al-Anteils sind aluminiumreiche Flugaschen aber auch Tone, beispielsweise calcinierte Tone, Bauxit, Al-haltige Abfallmaterialien und Rückstände gut geeignet.

In der Regel werden die Rohstoffe bezüglich Korngröße und Korngrößenverteilung optimiert. Dazu eignen sich mechanische oder thermische Behandlungen, wobei die thermische Behandlung auch zu einer Verbesserung/Optimierung der (chemischen) mineralogischen Zusammensetzung führen kann. Beispiele dafür sind die Verbrennung von Kohlenstoff (z.B. aus Aschen) oder der Umsetzung von unreaktiven Phasen in reaktivere Verbindungen, wie zum Beispiel SiO₂ oder C₂AS in C₂S, was wiederum zu einer verbesserten Umsetzung während des Autoklavierens führen kann.

In einer bevorzugten Ausgestaltung wird ein Ausgangsmaterial gewählt bzw. durch Vorbehandlung erzeugt, dessen Größtkorn höchstens 0,1 mm beträgt. Hierfür kommen insbesondere die feineren Kornfraktionen aus der Wiederaufbereitung von zementhaltigen Bindemitteln in Baustoffen wie Altbetonen und -zementen zum Einsatz. Ein feineres Ausgangsmaterial ist sowohl im Hinblick auf die Umsetzungsgeschwindigkeit vorteilhaft, als auch hinsichtlich des Aufwandes für die Mahlung des fertigen Zementes. Bei entsprechend feinem Ausgangsmaterial kann eine Mahlung nach der hydrothermalen Behandlung und Temperung entbehrlich sein. Eine Mahlung des erhaltenen Zementes ist in den meisten Fällen nicht notwendig bzw. beschränkt sich auf das Erreichen üblicher Zementfeinheiten. Eine "aktivierende" Intensivvermahlung ist nicht notwendig und findet nicht statt.

Während des Mischens der Rohstoffe b) oder der anschließenden Prozessschritte erfolgt vorzugsweise eine Zugabe von zusätzlichen Elementen oder Oxiden in einer Menge von 0,1 bis 30 Gew.-%. Natrium, Kalium, Bor, Schwefel, Phosphor oder deren Kombination sind als diese zusätzlichen Elemente/Oxide, die auch zusammenfassend als Fremdoxide bezeichnet werden, bevorzugt. Hierfür eignen sich Alkali- und/oder Erdalkali-Salze und/oder Hydroxide mit Ausnahme von Mg-Verbindungen, beispielsweise, aber nicht ausschließlich, CaSO₄ · 2 H₂O, CaSO₄ · ½H₂O, CaSO₄, CaHPO₂ · 2H₂O, Ca₃P₂O₈, NaOH, KOH, Na₂CO₃, NaHCO₃, K₂CO₃, Na₂Al₂O₄, Na₃PO₄, K₃PO₄, Na₂[B₄O₅(OH)₄] · 8H₂O, CaCl₂, Ca(NO₃)₂, AlCl₃, Al(NO₃)₃, FeCl₃, Fe(NO₃)₃ Ca(CH₃COO)₂, Al(CH₃COO)₃, Ca(HCOO)₂, Al(HCOO)₃ und Mischungen von zwei, drei oder noch mehr davon. In einer bevorzugten Ausführungsform weist die Ausgangsmaterialmischung ein molares Verhältnis P/Si von etwa 0,05 und/oder S/Si von etwa 0,05 und/oder Ca/K von etwa 0,05 auf.

Die, optional wie beschrieben vorbehandelte, Rohstoffmischung kann gegebenenfalls mit Kristallisationskeimen, die beispielsweise Calciumsilikathydrate, Portlandklinker, Hüttensand, Calciumsulfataluminat(belit)zement, Wasserglas, Glaspulver etc. enthalten, versetzt, also geimpft werden. Die Reaktion kann hierbei durch Impfen mit von 0,01 - 30 Gew.-% Kristallisationskeimen, insbesondere verschiedener Calciumsilikat- und Calciumsilikathydrat enthaltender Verbindungen, insbesondere mit α-2CaO·SiO₂ · H₂O, Afwillit, Calciochondrodit, α- und β-Ca₂SiO₄ und anderen Verbindungen, beschleunigt werden.

Die hergestellte Mischung der Rohstoffe, die ggf. wie oben beschrieben geimpft ist, wird anschließend in Schritt c) einer hydrothermalen Behandlung im Autoklaven bei einer Temperatur von 100 bis 300 °C, bevorzugt von 150 °C bis 250 °C unterzogen. Hierbei wird bevorzugt ein Wasser/Feststoff-Verhältnis von 0,1 bis 100, bevorzugt von 2 bis 20 gewählt. Die Verweilzeiten betragen vorzugsweise von 0,1 bis 24 Stunden, bevorzugt von 1 bis 16 Stunden.

Als mindestens eine Rohstoffkomponente Autoklavierungsschritt kann Ofen- oder Heißmehl verwendet werden. Der Vorteil besteht darin, dass dieses Material zu großen Teilen schon entsäuert vorliegt und infolgedessen Energie aber auch zusätzliche Ausrüstung eingespart werden kann. Zusätzlich dazu ermöglicht dies eine "Werk im Werk-Lösung", da Abwärmeströme bzw. -mengen gezielt für den Autoklavierungs- und Temperungsprozess genutzt werden können.

Die durch Mischen der Rohstoffe erzeugte Ausgangsmaterialmischung wird entsprechend Schritt c) in das mindestens ein Calciumsilikathydrat oder Calciumaluminathydrat oder Calciumaluminiumsilikathydrat oder (Aluminium, Eisen)silikathydrat oder Calcium(Aluminium, Eisen)silikat und ggf. weitere Verbindungen enthaltende Zwischenprodukt durch hydrothermale Behandlung umgewandelt. Dies erfolgt in einem Autoklaven, bei einer Temperatur von 100 bis 300 °C und einer Verweilzeit von 0,1 bis 24 h, wobei das Wasser/FeststoffVerhältnis von 0,1 bis 100 beträgt. Der Druck im Autoklaven hängt von der Temperatur ab, je höher die Tenmperatur desto höher der Druck. Typischerweise beträgt der Druck von 0,5 bis 10 MPa. Ein hoher Druck ermöglicht kürzere Verweilzeiten.

Das in Schritt c) erhaltene Zwischenprodukt enthält zumindest ein, normalerweise mehrere, der genannten Calciumsilikat- bzw. aluminathydrate, typischerweise:
- 0,01 bis 80 Gew.-% α-C₂SH, verschiedene C-S-H Formen einschließlich Dellait und teilweise karbonatisierte C-S-H Phasen sowie amorphe und wenig kristalline Phasen davon
- 0,01 bis 80 Gew.-% Katoit, Si-Katoit, Fe-Katoit, auch als Mono- und Hemikarbonate sowie als amorphe und wenig kristalline Phasen
- 0,01 bis 80 Gew.-% Calcium(Aluminium, Eisen)silikate,
- silikathydrate sowie amorphe und wenig kristalline Phasen davon
- 0,01 bis 80 Gew.-% Aluminium- und/oder Eisensilikate und -silikathydrate sowie amorphe und wenig kristalline Phasen davon
- Spuren- und Nebenbestandteile wie Aluminium- / Eisenoxide und -hydroxide, C₂AS, CH, Quarz und Calcit.

Bei den amorphen und wenig kristallinen Phasen handelt es sich im allgemeinen um eine Vorstufe zu den kristallinen Phasen, wie zum Beispiel Calciumsilikate (Belit), Calciumaluminate (Monocalciumaluminate, Mayenit), (Aluminium, Eisen)silikate usw., die keine oder nur eine geringe atomare (Nah)Ordnung aufweisen. Das spiegelt sich in der fehlenden Ausbildung von Röntgenreflexen bzw. der Ausbildung sehr stark verbreiteter Reflexe geringerer Intensitäten wieder. Ein gutes Beispiel hierfür stellt ein Hüttensand mit hohem amorphem Anteil (>95 %) dar. Typisch sind ein sehr ausgeprägter sogenannter "Glasbuckel" über einem 2Thethabereich an dem, je nach chem. Zusammensetzung, die Hauptpeak(s) der kristallinen Phasen, zum Beispiel Akermannit oder Gehlenit, liegen. Der Grad der Kristallisation hängt von diversen Parametern, wie zum Beispiel der Art des Ausgangsmaterials, der Temperatur, dem Druck und dem Einbau von Fremdionen ab.

Im folgenden Schritt d) wird das Zwischenprodukt bei einer Temperatur von 350 °C bis 600°C getempert. Hierbei betragen die Aufheizrate von 10 - 6000 °C/min, bevorzugt von 20-100 °C/min und besonders bevorzugt etwa 40 °C/min, und die Verweilzeit von 0,01 - 600 min, bevorzugt von 1-120 min und besonders bevorzugt von 5 - 60 min. Es findet kein Reaktionsmahlen statt. Die Temperatur beträgt vorzugsweise 400 bis 550 °C, insbesondere 400 bis 495 °C. Je höher die Temperatur beim Brennen, desto geringer ist vorzugsweise die Zeitdauer des Brennens. Brenntemperaturen unter 500 °C führen zu besonders reaktivem Material, höhere Brenntemperaturen sind jedoch möglich und können je nach Ausgangsmaterial sinnvoll sein. Die Brenntemperatur und -dauer sollte so hoch gewählt werden, dass möglichst alles Ausgangsmaterial umgesetzt wird. Andererseits sollte die Temperatur so niedrig wie möglich sein, da die Reaktivität des Produkts höher ist und dies außerdem die erforderliche Energie und damit Kosten sowie Umweltbeeinträchtigung begrenzt.

Nach dem Abkühlen erhält man ein Produkt, welches mindestens ein Calciumsilikat C₂S, mindestens ein Calciumaluminat und mindestens eine röntgenamorphe Phase umfasst. In der Regel enthält das Produkt die folgenden Komponenten:
- 1-95 Gew.-% reaktive Calciumaluminate, vorzugsweise in Form von kristallinem C₁₂A₇, oder von wenig kristallinen oder amorphen Aluminatphasen
- 1-80 Gew.-% C₂S Polymorphe, als kristalline, wenig kristalline oder amorphe Phasen
- 1-80 Gew.-% Calciumaluminatsilkate, als kristalline, wenig kristalline oder amorphe Phasen
- bis zu 30 Gew.-% Spuren- und Nebenbestandteile, insbesondere C₅A₃, CA, Calciumoxid, γ-Aluminiumoxid und andere Aluminiumoxide, Quarz und/oder Kalkstein, CaO, Calciumsulfat, Fe₃O₄, Eisensilikate wie Fe₂SiO₄, amorphe Eisen-haltige Phasen und
- 0-30 Gew.-% Hydrate aus der hydrothermalen Behandlung,
wobei sich alle Anteile des Produkts auf 100 % summieren und die Summe von Calciumsilikaten, Calciumaluminaten und Calciumaluminiumsilikaten mindestens 30 Gew.-%, vorzugsweise mindestens 50 Gew.-%, am meisten bevorzugt mindestens 70 Gew.-% beträgt.

Sofern die Feinheit des Produkts bereits ausreicht (Einsatz feiner Rohstoffe mit geeigneter Kornverteilung), ist das Produkt bereits der gewünschte, Beschleuniger. Reicht die Feinheit nicht oder wird ein Bindemittel mit besonders hoher Feinheit gewünscht, kann das Produkt in an sich bekannter Weise, mit oder ohne Zusätze, auf eine gewünschte Feinheit bzw. Kornverteilung vermahlen werden. Geeignete Feinheiten sind beispielsweise 2000 bis 10.000 cm²/g (nach Blaine).

Der Beschleuniger wird in einer Menge von 2 bis 20 Gew.-%, vorzugsweise 5 bis 10 Gew.-%, einem Bindemittel zugefügt, welches Portlandzement enthält. Der Portlandzement ist typischerweise in einer Menge im Bereich von 80 bis 98 Gew.-%, vorzugsweise 90 bis 95 Gew.-% enthalten.

Durch die Zugabe des erfindungsgemäßen Beschleunigers werden zum Teil signifikante Mengen Aluminium eingebracht. Es ist daher bevorzugt, die Menge an Calciumsulfat in dem Bindemittel anzupassen, d.h. bei einem Beschleuniger mit hohem und mittlerem Aluminiumgehalt wird dem Bindemittel vorzugsweise auch zusätzliches Calciumsulfat zugefügt. Mengen von 10 bis 40 Gew.-%, vorzugsweise etwa 30 Gew.-%, bezogen auf den Beschleuniger haben sich bewährt. Die Menge Calciumsulfat wird auf den Aluminiumoxidgehalt abgestimmt, so dass beide im Bindemittel in einem ausgewogenen Verhältnis enthalten sind, d.h. ein Molverhältnis SO₃ zu Al₂O₃ von 2,5 bis 3,0, vorzugsweise von 2,9 bis 3,0 vorliegt.

Das Bindemittel kann neben dem erfindungsgemäßen Beschleuniger und Portlandzement zusätzlich eine oder mehrere weitere Komponenten enthalten. Geeignet sind vor allem Puzzolane, insbesondere Flugasche. Weitere mögliche Komponenten sind Metakaolin und Kalkstein. Diese Komponenten können in der gewünschten Feinheit zugefügt oder gemeinsam mit dem Beschleuniger und/oder dem Portlandzement vermahlen werden.

Die BET-Oberfläche des Bindemittels soll von 1 bis 30 m²/g betragen.

Das Bindemittel eignet sich für alle Anwendungen, für die Portlandzement verwendet wird. Beispielsweise für Beton zur Herstellung von Fertigbauteilen wie Platten, Trägern, Straßenteilen, und als Ortbeton beim Bau von Gebäuden, Dämmen etc. Auch für Mörtel, Putz, Estrich usw. ist das Bindemittel gut geeignet. Bei der Verarbeitung können in an sich bekannter Weise Zusatzmittel, Zusatzstoffe und Gesteinskörnungen zur Anwendung kommen. Zusatzmittel sind beispielsweise Verflüssiger, Verzögerer, Korrosionsschutzmittel, Schwindverhinderer, Luftporenbildner. Die Zusätze werden in den üblichen Mengen verwendet.

Durch den erfindungsgemäßen Beschleuniger, seine Verwendung und das Verfahren können hydraulisch hochreaktive Bindemittel auf Basis von Portlandzement und C₂S, C₁₂A₇ und amorphen Phasen hergestellt werden. Die Beschleuniger zeichnen sich dadurch aus, dass sehr reaktive Polymorphe von C₂S, hoch reaktive(n) Calcium(Aluminium, Eisen)silikate, C₁₂A₇ und röntgenamorphe sowie wenig kristalline Phasen enthalten sind.

Im Unterschied zu DE 10 2009 018 632, DE 10 2007 035 257, DE 10 2007 035 258 und DE 10 2007 035 259 erfolgt kein Reaktionsmahlen, da dieser Schritt energieintensiv ist und derart hergestellte Produkte eine geringere Reaktivität aufweisen, als die mit dem hier beschriebenen Verfahren aus anders zusammengesetzten Rohstoffen hergestellten Produkte.

Im Gegensatz zu bisherigen Vorschlägen zur Herstellung von Belit-Bindemitteln mit einer Verwendung von aluminiumhaltigen Rohstoffen wird die Temperatur beim Tempern auf unter 600 °C, vorzugsweise unter 550 °C und insbesondere unter 500 °C begrenzt, so dass sehr reaktive Polymorphe von C₂S and C₁₂A₇, und anderen Phasen und eine röntgenamorphe Phase erhalten werden. Dadurch ergibt sich eine sehr hohe Reaktivität und eine besonders schnelle Hydratation, basierend auf den gebildeten Calcium- und Aluminiumsilikathydraten.

Im Unterschied zu den bekannten Beschleunigern wie Calciumaluminat, Tonerdezement, Calciumsulphoalumintzement benötigt der erfindungsgemäße Beschleuniger weniger Energie bei der Herstellung (hydrothermale Behandlung und Tempern anstelle von Sintern bei ≥1200 °C). Im Vergleich zu Aluminiumsalzen ist der Einsatz als Trockensubstanz möglich, es gibt keine Probleme mit der Stabilität von Suspensionen.

Die Erfindung soll anhand der folgenden Beispiele erläutert werden, ohne jedoch auf die speziell beschriebenen Ausführungsformen beschränkt zu sein. Soweit nichts anderes angegeben ist oder es sich aus dem Zusammenhang nicht zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Aus den in Tabelle 1 aufgelisteten Rohstoffen wurde eine Ausgangsmaterialmischungen mit 35,44 % CaO und 64,56 % Geloxal hergestellt.

**Tabelle 1**

| Rohstoff | CaO | Geloxal |
|---|---|---|
| Glühverlust 1050°C | 0% | 45,65% |
| SiO₂ | | |
| Al₂O₃ | | 50% |
| TiO₂ | | |
| MnO | | |
| Fe₂O₃ | | |
| CaO | 100% | 0,14% |
| MgO | | 0,10% |
| K₂O | | |
| Na₂O | | 1,14% |
| SO₃ | | 0,38% |
| P₂O₅ | | |

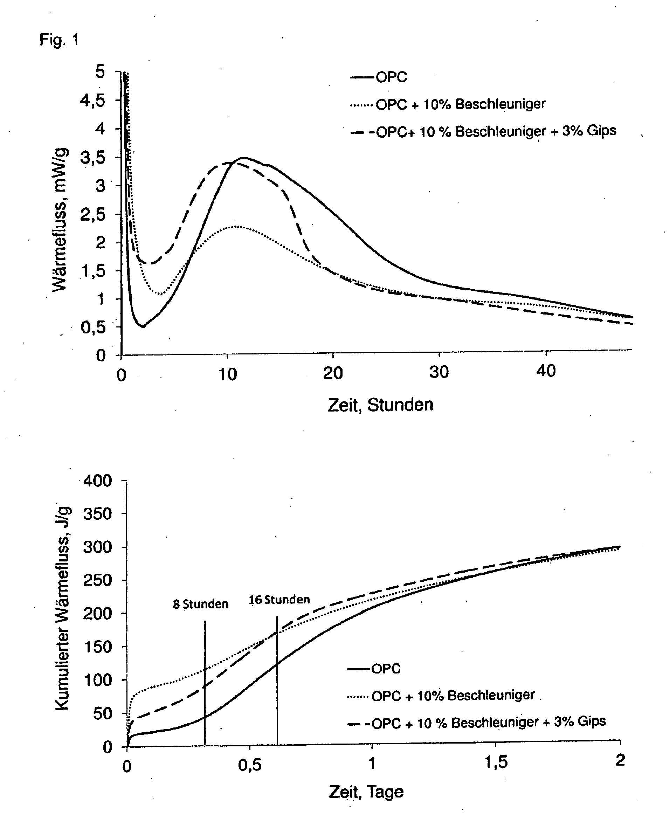

Die Ausgangsmaterialmischung wurde mit Wasser in einem Wasser/Feststoffverhältnis von 10 vermischt und 16 Stunden bei 185 °C und 1,1 MPa in einem Edelstahl-Autoklaven behandelt. Die Zwischenprodukte wurden 1 Stunde bei 500 °C getempert. Mischungen aus 10 % des erhaltenen Beschleunigers mit Potlandzement sowie aus 10 % des Beschleunigers und 3 % Gips mit Portlandzement wurden zur Prüfung der hydraulischen Reaktivität mit einem Wasser-Feststoffverhältnis von 0,5 in einem Kalorimeter zur Reaktion gebracht. Zum Vergleich wurde der reine Portlandzement mit demselben Wasser-Feststoffverhältnis herangezogen. Die erhaltenen Wärmeflüsse und kumulierten Wärmeflüsse sind in der Figur 1 dargestellt. In der Figur bezeichnet OPC den reinen Portlandzement, OPC + Beschleuniger das Gemisch aus OPC und dem erfindungsgemäßen Beschleuniger und OPC + Beschleuniger + Gips das Gemisch aus OPC, Beschleuniger und Gips.

Man erkennt, dass das erfindungsgemäß beschleunigte Bindemittel sehr reaktiv ist und schon kleine Mengen des Beschleunigers die Hydratation von Portlandzement beschleunigen. Der Hauptpeak der Wärmeentwicklung ist deutlich nach links verschoben, die Wärmeentwicklung setzt schneller ein. Der nach 8 Stunden bestimmte kumulierte Wärmefluss für das Bindemittel mit Beschleuniger und Gips ist doppelt so hoch, wie der für reinen Portlandzement. Nach 16 Stunden sind es noch 40 % mehr.

### Beispiel 2

Aus den in Tabelle 2 aufgelisteten Rohstoffen wurde eine Ausgangsmaterialmischung mit 62,5 % Portlandit, 20,27 % Quartz und 17,23 % Geloxal hergestellt und entsprechend Beispiel 1 zu einem Beschleuniger umgesetzt.

**Tabelle 2**

| Rohstoff | Portlandit | Quartz | Geloxal |
|---|---|---|---|
| Glühverlust 1050°C | 24,33% | | 45,65% |
| SiO₂ | | 100% | |
| Al₂O₃ | | | 50% |
| TiO₂ | | | |
| MnO | | | |
| Fe₂O₃ | | | |
| CaO | 75,67% | | 0,14% |
| MgO | | | 0,10% |
| K₂O | | | |
| Na₂O | | | 1,14% |
| SO₃ | | | 0,38% |
| P₂O₅ | | | |

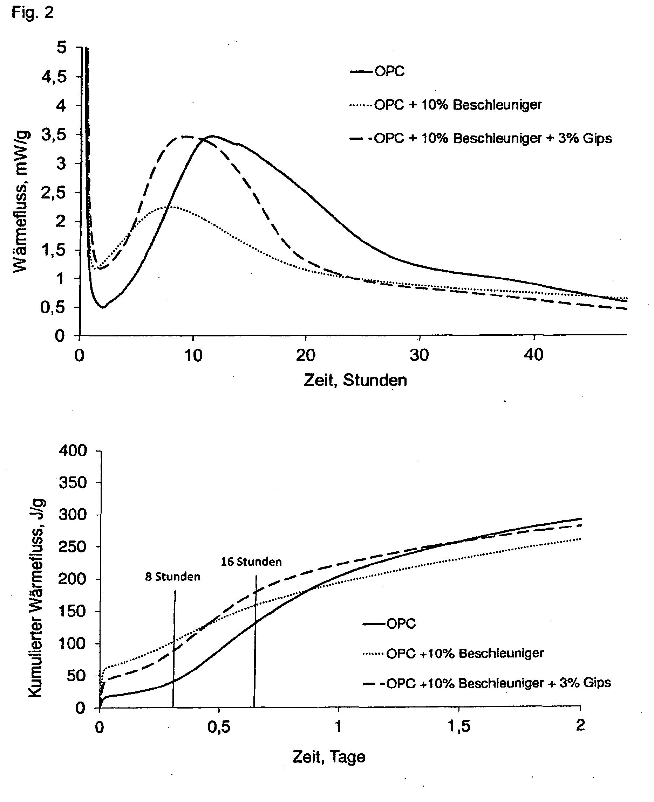

Die Prüfung der hydraulischen Reaktivität erfolgte ebenfalls wie in Beispiel 1. Die gemessenen Wärmeflüsse bzw. kumulierten Wärmeflüsse sind in Figur 2 dargestellt.

Es ist erkennbar, dass wiederum der Hauptpeak des Wärmeflusses früher liegt, die Wärmeentwicklung schneller einsetzt. Der kumulierte Wärmefluss für das Bindemittel mit Beschleuniger und Gips beträgt nach 8 Stunden 113 % desjenigen, der für den reinen Portlandzement gemessen wurde. Nach 16 Stunden ist er immer noch 38 % höher.

### Beispiel 3

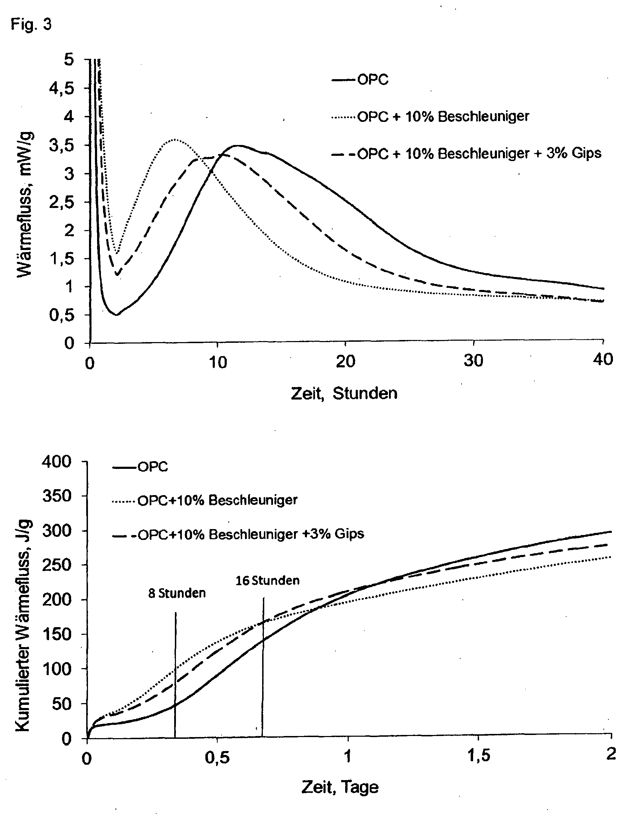

Aus den in Tabelle 2 aufgelisteten Rohstoffen wurde eine Ausgangsmaterialmischung mit 66,55 % Portlandit, 24,28 % Quartz und 9,17 % Geloxal hergestellt und entsprechend Beispiel 1 zu einem Beschleuniger umgesetzt. Die Prüfung der hydraulischen Reaktivität erfolgte ebenfalls wie in Beispiel 1. Die gemessenen Wärmeflüsse bzw. kumulierten Wärmeflüsse sind in Figur 3 dargestellt.

Es ist erkennbar, dass auch hier der Hauptpeak des Wärmeflusses früher liegt, die Wärmeentwicklung schneller einsetzt. Der kumulierte Wärmefluss für das Bindemittel mit Beschleuniger und Gips beträgt nach 8 Stunden 72 % desjenigen, der für den reinen Portlandzement gemessen wurde. Nach 16 Stunden ist er immer noch 25 % höher.

Aus den Beispielen wird deutlich, dass der erfindungsgemäße Beschleuniger zu Bindemitteln auf Basis von Portlandzement mit hoher Frühfestigkeit führt, die Erhärtung kann signifikant beschleunigt werden. Energieeinsatz und CO₂ Emission können im Vergleich zu z.B. Ye'elimit basierten Beschleunigern gesenkt werden.

## Patentansprüche

1. Verwendung eines Belit-Calciumaluminat erhältlich durch ein Verfahren umfassend die Schritte:
a) Bereitstellen eines Ausgangsmaterials aus einem oder mehreren Rohstoffen, die CaO, SiO₂, Al₂O₃ und Fe₂O₃ oder andere Verbindungen dieser Elemente enthalten und wobei das Ausgangsmaterial ein molares Ca/(Si+Al+Fe)-Verhältnis von 1,0 bis 3,5 und ein molares Al/Si-Verhältnis von 100 bis 0,1 aufweist,
b) Mischen der Rohstoffe zu einer Ausgangsmaterialmischung,
c) Hydrothermales Behandeln der in Schritt b) hergestellten Ausgangsmaterialmischung im Autoklaven bei einer Temperatur von 100 bis 300 °C und einer Verweilzeit von 0,1 bis 24 h, wobei das Wasser/Feststoff-Verhältnis 0,1 bis 100 beträgt, und
d) Tempern des in Schritt c) erhaltenen Zwischenprodukts bei 350 bis 600 °C, wobei die Aufheizrate 10-6000 °C/min und die Verweilzeit 0,01-600 min betragen
als Beschleuniger des Ansteifens/Erstarrens und/oder der Erhärtung von Portlandzement.

2. Verwendung gemäß Anspruch 1, **dadurch gekennzeichnet, dass** während des Mischens b) und/oder in den folgenden Schritten 0,1 bis 30 Gew.-% zusätzliche Elemente und/oder Oxide zugegeben werden.

3. Verwendung gemäß Anspruch 1 oder 2, **dadurch gekennzeichnet, dass** die Rohstoffe ausgewählt sind aus CaO, Ca(OH)₂, Calciumcarbonaten, Calciumcarbonathydraten, Aschen, Portlandzement-Klinkern, Portlandzement, aufbereiteten Zementsteinen, CSAB, CAC, Glaspulver, Wasserglas und natürlichen Gesteinsmehlen (z.B. Basalt, Granit, etc.) in geeigneter Mischung.

4. Verwendung gemäß mindestens einem der Ansprüche 1 bis 3, **dadurch gekennzeichnet, dass** zwischen dem Mischen der Ausgangsstoffe b) und der hydrothermalen Behandlung c) ein zusätzlicher Brennprozess bei Temperaturen von 350 bis 1400 °, vorzugsweise von 750 bis 1100 °C, durchgeführt wird.

5. Verwendung gemäß mindestens einem der Ansprüche 1 bis 4, **dadurch gekennzeichnet, dass** zur Entwässerung in Schritt d) während des Aufheizens bei einer Temperatur von 350 - 600 °C eine Haltezeit von 1 - 120 min eingestellt wird.

6. Verwendung gemäß mindestens einem der Ansprüche 2 bis 5, **dadurch gekennzeichnet, dass** Natrium, Kalium, Bor, Schwefel, Chlor, Stickstoff, Kohlenstoff oder Phosphor oder Kombinationen davon als zusätzliche Elemente verwendet werden.

7. Verwendung gemäß mindestens einem der Ansprüche 2 bis 6, **dadurch gekennzeichnet, dass** Alkali- und/oder Erdalkali-Salze und/oder -Hydroxide als Quelle für die zusätzlichen Elemente und/oder Oxide verwendet werden, vorzugsweise ausgewählt unter Alkali- und/oder Erdalkali-Salzen und/oder Hydroxiden aus der Gruppe bestehend aus CaSO₄ · 2H₂O, CaSO₄ · ½ H₂O, CaSO₄, CaHPO₂ · 2H₂O, Ca₃P₂O₈, NaOH, KOH, Na₂CO₃, NaHCO₃, K₂CO₃, Na₂Al₂O₄, Na₃PO₄, K₃PO₄, Na₂[B₄O₅(OH)₄] · 8H₂O, CaCl₂, Ca(NO₃)₂, AlCl₃, Al(NO₃)₃, FeCl₃, Fe(NO₃)₃, Ca(CH₃COO)₂, Al(CH₃COO)₃, Ca(HCOO)₂, Al(HCOO)₃, oder deren Mischungen.

8. Verwendung gemäß mindestens einem der Ansprüche 1 bis 7, **dadurch gekennzeichnet, dass** dem Portlandzement Calciumsulfat zugefügt wird, vorzugsweise in einer Menge von 10 bis 40 Gew.-% bezogen auf den Beschleuniger.

9. Verwendung gemäß mindestens einem der Ansprüche 1 bis 8, **dadurch gekennzeichnet, dass** vor der hydrothermalen Behandlung c) dem Gemisch von 0,01 bis 30 Gew.-% Impfkeime enthaltend Calciumsilikathydrate, Portlandklinker, Calciumsulfataluminat(belit)zement, Wasserglas und/oder Glaspulver zugegeben werden.

10. Verwendung gemäß mindestens einem der Ansprüche 1 bis 9, **dadurch gekennzeichnet, dass** es mindestens ein Calciumsilikat, Calciumaluminat, Calciumaluminiumsilikat, Calcium(Aluminium, Eisen)silikat oder und mindestens eine röntgenamorphe Phase umfasst, wobei die Summe von Calciumsilikaten, Calciumaluminaten, Calciumaluminiumsilikaten und Calcium(Aluminium, Eisen)silikaten mindestens 30 Gew.-% beträgt.

11. Verwendung gemäß mindestens einem der Ansprüche 1 bis 10, **dadurch gekennzeichnet, dass** es die folgenden Komponenten umfasst:
1 - 95 Gew.-% reaktive Calciumaluminate, vorzugsweise in Form von kristallinem C₁₂A₇, oder von wenig kristallinen oder amorphen Aluminatphasen
1 - 80 Gew.-% Calcium(Aluminium, Eisen)silikate, als kristalline, wenig kristalline oder amorphe Phasen, die Fremdionen wie Ca, Fe, Al enthalten können
1 - 80 Gew.-% C₂S Polymorphe, als kristalline, wenig kristalline oder amorphe Phasen
1 - 80 Gew.-% Calciumaluminatsilkate, als kristalline, wenig kristalline oder amorphe Phasen
und bis zu 30 Gew.-% Spuren- und Nebenbestandteile, insbesondere C₅A₃, CA, Calciumoxid, γ-Aluminiumoxid und andere Aluminiumoxide, Quarz und/oder Kalkstein, CaO, Calciumsulfat, FeO, Fe₂O₃, Fe₃O₄, Eisensilikate wie Fe₂SiO₄, amorphe Eisen-haltige Phasen und
0 - 30 Gew.-% Hydrate aus der hydrothermalen Behandlung.

## Claims

1. Use of a belite calcium aluminate obtainable by a method comprising the following steps:
a) providing a starting material from one or more raw materials that contain CaO, SiO₂, Al₂O₃ and Fe₂O₃ or other compounds of these elements, wherein the starting material has a molar Ca/(Si+Al+Fe) ratio from 1 to 3.5 and a molar Al/Si ratio from 100 to 0.1,
b) mixing the raw materials to form a starting material mixture,
c) hydrothermal treating of the starting material mixture produced in step b) in an autoclave at a temperature from 100 to 300°C and a residence time from 0.1 to 24 h, wherein the water/solids ratio is 0.1 to 100, and
d) tempering the intermediate product obtained in step c) at 350 to 600°C, wherein the heating rate is 10-6000°C/min and the residence time is 0.01-600 min
as an accelerator of the early stiffening/setting and/or of the hardening of Portland cement.

2. The use according to Claim 1, **characterised in that** 0.1 to 30 % by weight additional elements and/or oxides are added during the mixing b) and/or in the following steps.

3. The use according to Claim 1 or 2, **characterised in that** the raw materials are selected from CaO, Ca(OH)₂, calcium carbonates, calcium carbonate hydrates, ashes, Portland cement clinkers, Portland cement, processed hardened cement pastes, CSAB, CAC, glass powder, sodium silicate and natural stone dusts (for example basalt, granite, etc.) in suitable mixture.

4. The use according to at least one of Claims 1 to 3, **characterised in that** an additional burning process at temperatures from 350 to 1400°C, preferably from 750 to 1100 °C, is performed between the mixing of the starting materials b) and the hydrothermal treatment c).

5. The use according to at least one of Claims 1 to 4, **characterised in that** a holding time of 1 - 120 minutes during heating at a temperature of 350 - 600 °C is performed for dewatering in step d).

6. The use according to at least one of Claims 2 to 5, **characterised in that** sodium, potassium, boron, sulphur, chlorine, nitrogen, carbon or phosphorous or combinations thereof are used as additional elements.

7. The use according to at least one of Claims 2 to 6, **characterised in that** alkaline and/or earth alkaline salts and/or hydroxides are used as a source for the additional elements and/or oxides, preferably selected from alkaline and/or earth alkaline salts and/or hydroxides from the group consisting of CaSO₄ · 2H₂O, CaSO₄ · ½ H₂O, CaSO₄, CaHPO₂ · 2H₂O, Ca₃P₂O₈, NaOH, KOH, Na₂CO₃, NaHCO₃, K₂CO₃, Na₂Al₂O₄, Na₃PO₄, K₃PO₄, Na₂[B₄O₅(OH)₄] · 8H₂O, CaCl₂, Ca(NO₃)₂, AlCl₃, Al(NO₃)₃, FeCl₃, Fe(NO₃)₃, Ca(CH₃COO)₂, Al(CH₃COO)₃, Ca(HCOO)₂, Al(HCOO)₃, or mixtures thereof.

8. The use according to at least one of Claims 1 to 7, **characterised in that** calcium sulphate is added to the Portland cement, preferably in an amount from 10 to 40 % by weight based on the accelerator.

9. The use according to at least one of Claims 1 to 8, **characterised in that**, before the hydrothermal treatment c), from 0.01 to 30 % by weight seeds containing calcium silicate hydrates, Portland clinker, calcium sulphate aluminate (belite) cement, sodium silicate and/or glass powder are added to the mixture.

10. The use according to at least one of Claims 1 to 9, **characterised in that** it comprises at least one calcium silicate, calcium aluminate, calcium aluminium silicate, calcium (aluminium, iron) silicate or/and at least one X-ray amorphous phase, wherein the sum of calcium silicates, calcium aluminates, calcium aluminium silicates and calcium (aluminium, iron) silicates is at least 30 % by weight.

11. The use according to at least one of Claims 1 to 10, **characterised in that** it comprises the following components:
1 - 95 % by weight reactive calcium aluminates, preferably in the form of crystalline C₁₂A₇, or ill crystalline or amorphous aluminate phases
1 - 80 % by weight calcium (aluminium, iron) silicates, in the form of crystalline, ill crystalline or amorphous phases, which may contain foreign ions such as Ca, Fe and Al
1 - 80 % by weight C₂S polymorphs, in the form of crystalline, ill crystalline or amorphous phases
1 - 80 % by weight calcium aluminate silicates, in the form of crystalline, ill crystalline or amorphous phases
and up to 30 % by weight traces and minor components, in particular C₅A₃, CA, calcium oxide, γ alumina and other aluminas, quartz and/or limestone, CaO, calcium sulphate, FeO, Fe₂O₃, Fe₃O₄, iron silicates such as Fe₂SiO₄, amorphous iron-containing phases and
0 - 30 % by weight hydrates from the hydrothermal treatment.

## Revendications

1. Utilisation d'un bélite-aluminate de calcium pouvant être obtenu grâce à un procédé comprenant les étapes consistant à :
a) préparer un matériau de départ constitué d'une ou plusieurs matières premières qui contiennent du CaO, SiO₂, Al₂O₃ et Fe₂O₃ ou d'autres composés desdits éléments, dans lequel le matériau de départ présente un rapport molaire Ca/(Si+Al+Fe) compris entre 1,0 et 3,5 et un rapport molaire Al/Si compris entre 100 et 0,1,
b) mélanger les matières premières pour obtenir un mélange formant matériau de départ,
c) traiter de manière hydrothermique le mélange formant matériau de départ préparé à l'étape b) dans un autoclave à une température comprise entre 100 et 300°C et avec un temps de séjour compris entre 0,1 et 24 h, dans lequel le rapport eau/substances solides est comprise entre 0,1 et 100, et
d) recuire le produit intermédiaire obtenu à l'étape c) entre 350 et 600°C, dans lequel la vitesse de chauffage est comprise entre 10 et 6 000°C/minute et le temps de séjour est comprise entre 0,01 et 600 minutes
en tant qu'accélérateur du raffermissement/de la solidification et/ou du durcissement d'un ciment Portland.

2. Utilisation selon la revendication 1, **caractérisée en ce que** 0,1 à 30 % en poids d'éléments et/ou d'oxydes supplémentaires sont ajoutés pendant le mélange b) et/ou dans les étapes suivantes.

3. Utilisation selon la revendication 1 ou 2, **caractérisée en ce que** les matières premières sont choisis parmi CaO, Ca(OH)₂, des carbonates de calcium, des hydrates de carbonate de calcium, des cendres, des klinkers de ciment Portland, du ciment Portland, des pâtes de ciment préparées, du ciment CSAB (sulfoaluminate de calcium-bélite), du ciment CAC (aluminate de calcium), de la poudre de verre, du verre soluble et des farines de pierre naturelle (par exemple du basalte, du granit, etc.) en un mélange approprié.

4. Utilisation selon au moins l'une quelconque des revendications 1 à 3, **caractérisée en ce qu'**un procédé de cuisson supplémentaire à des températures comprises entre 350 et 1 400°C, de manière préférée entre 750 et 1 100°C, est mis en oeuvre entre le mélange des substances de départ b) et le traitement hydrothermique c).

5. Utilisation selon au moins l'une quelconque des revendications 1 à 4, **caractérisée en ce qu'**un temps d'arrêt compris entre 1 et 120 minutes est ajusté en vue d'une déshydratation à l'étape d) pendant le chauffage à une température comprise entre 350 et 600°C.

6. Utilisation selon au moins l'une quelconque des revendications 2 à 5, **caractérisée en ce que** du sodium, du potassium, du bore, du souffre, du chlore, de l'azote, du carbone ou du phosphore ou des combinaisons de ceux-ci sont utilisés en tant qu'éléments supplémentaires.

7. Utilisation selon au moins l'une quelconque des revendications 2 à 6, **caractérisée en ce que** des sels alcalins et/ou alcalinoterreux et/ou des hydroxydes alcalins et/ou alcalinoterreux sont utilisés en tant que sources pour les éléments et/ou oxydes supplémentaires, de manière préférée choisis parmi des sels alcalins et/ou alcalinoterreux et/ou des hydroxydes alcalins et/ou alcalinoterreux issus du groupe constitué de CaSO₄·2H₂O, CaSO₄·½H₂O, CaSO₄, CaHPO₂·2H₂O, Ca₃P₂O₈, NaOH, KOH, Na₂CO₃, NaHCO₃, K₂CO₃, Na₂Al₂O₄, Na₃PO₄, K₃PO₄, Na₂[B₄O₅(OH)₄]·8H₂O, CaCl₂, Ca(NO₃)₂, AlCl₃, Al(NO₃)₃, FeCl₃, Fe(NO₃)₃, Ca(CH₃COO)₂, Al(CH₃COO)₃, Ca(HCOO)₂, Al(HCOO)₃, ou des mélanges de ceux-ci.

8. Utilisation selon au moins l'une quelconque des revendications 1 à 7, **caractérisée en ce que** du sulfate de calcium est ajouté au ciment Portland, de manière préférée en une quantité comprise entre 10 et 40 % en poids par rapport à l'accélérateur.

9. Utilisation selon au moins l'une quelconque des revendications 1 à 8, **caractérisée en ce que** 0,01 à 30 % en poids de germes d'inoculation contenant des hydrates de silicate de calcium, du klinker de ciment Portland, du ciment de sulfoaluminate de calcium-bélite, du verre soluble et/ou de la poudre de verre sont ajoutés au mélange avant le traitement hydrothermique c).

10. Utilisation selon au moins l'une quelconque des revendication 1 à 9, **caractérisée en ce qu'**elle comprend au moins un silicate de calcium, un aluminate de calcium, un silicate de calcium-aluminium, un silicate de calcium (-aluminium, -fer) et/ou au moins une phase amorphe aux rayons X, dans laquelle la somme des silicates de calcium, des aluminates de calcium, des silicates de calcium-aluminium et des silicates de calcium (-aluminium, -fer) représente au moins 30 % en poids.

11. Utilisation selon au moins l'une quelconque des revendications 1 à 10, **caractérisée en ce qu'**elle comprend les composants suivants :
1 à 95 % en poids d'aluminates de calcium réactifs, de manière préférée sous forme de C₁₂A₇ cristallin ou de phases aluminate peu cristallines ou amorphes
1 à 80 % en poids de silicates de calcium (-aluminium, -fer), en tant que phases cristallines, peu cristallines ou amorphes pouvant contenir des ions étrangers comme Ca, Fe, Al
1 à 80 % en poids de polymorphes C₂S, en tant que phases cristallines, peu cristallines ou amorphes
1 à 80 % en poids de silicates d'aluminate de calcium, en tant que phases cristallines, peu cristallines ou amorphes
et jusqu'à 30 % en poids de constituants traces et accessoires, en particulier de C₅A₃, de CA, d'oxyde de calcium, d'oxyde de γ-aluminium et d'autres oxydes d'aluminium, de quartz et/ou de calcaire, de CaO, de sulfate de calcium, de FeO, de Fe₂O₃, de Fe₃O₄, de silicates de fer comme Fe₂SiO₄, de phases amorphes contenant du fer et 0 à 30 % en poids d'hydrates issus du traitement hydrothermique.
